# EUROPEAN PATENT APPLICATION

(11) **EP 2 745 799 A2**
(43) Date of publication of application: **25.06.2014**
(21) Application number: 12823720.3
(22) Date of filing: 14.08.2012
(51) Int. Cl.: A61C 7/36, A61C 7/06, A61C 7/12

(54) **CLEAR ALIGNER AND MANUFACTURING METHOD THEREOF, TRACTION DEVICE FOR CLEAR ALIGNER, AND AID FOR TRACTION DEVICE FOR CLEAR ALIGNER**

(30) Priority: 17.08.2011 KR 20110081557
(71) Applicant: Kim, Tae-Weon, Seoul 140-774 (KR)
(72) Inventor: Kim, Tae-Weon, Seoul 140-774 (KR)
(74) Representative: Ter Meer Steinmeister & Partner
(86) International application number: PCT/KR2012/006466
(87) International publication number: WO 2013/025037

(57) **Abstract**

The present invention relates to a clear aligner, a manufacturing method thereof, a traction device for a clear aligner, and an auxiliary tool for a traction device for a clear aligner. More particularly, the present invention relates to a clear aligner (10), a manufacturing method thereof, a traction device for a clear aligner, and an auxiliary tool (40) for a traction device for a clear aligner, wherein the clear aligner can improve orthodontic effects by increasing a correction force by traction of a clear aligner using an elastic band when it is impossible to correct teeth only with the clear aligner due to uneven teeth.

## Description

### Technical Field

The present invention relates, in general, to clear aligners, methods of manufacturing the same, traction devices for clear aligners and auxiliary tools for traction device for clear aligners and, more particularly, to a clear aligner, a manufacturing method thereof, a traction device for a clear aligner, and an auxiliary tool for a traction device for a clear aligner, wherein the clear aligner can improve orthodontic effects by increasing orthodontic force by traction of a clear aligner using an elastic band when orthodontia is impossible only with the clear aligner due to uneven teeth.

### Background Art

Generally, orthodontic methods are classified into a metal orthodontic method using an orthodontic device including a metal bracket, a lingual orthodontic method in which an orthodontic device is installed on inner surfaces of the teeth of a patient, and a transparent orthodontic method in which a clear aligner made of transparent material is mounted to the teeth of the patient.

Particularly, in the case of the transparent orthodontic method, the clear aligner made of transparent material is installed on the teeth in such a way that it covers the teeth in a manner similar to that of a mouthpiece. The clear aligner is not easily visible. In addition, the clear aligner is removable and wearable. Therefore, the transparent orthodontic method is receiving much attention, compared to the other orthodontic methods.

In the transparent orthodontic method using the clear aligner, several orthodontic steps are required in consideration of a transfer distance and direction of a tooth in need of orthodontia, and clear aligners corresponding to the respective orthodontic steps are used in such a way that a patient wears the clear aligners in steps. At each step, when the patient wears a clear aligner for a predetermined orthodontic period, the teeth of the patient are transferred to correspond to the shape of the clear aligner. When the wearing period of the final step clear aligner is finished, the orthodontia is finally completed.

However, if it is difficult to correct teeth only using the orthodontic force of the clear aligner, for example, when tooth arrangement is irregular or a tooth excessively protrudes, thus other orthodontic methods must also be used along with the transparent orthodontic method resulting in a complex process. Furthermore, because of a limitation in a tooth transfer distance of the clear aligner, the orthodontic period is comparatively long.

### Disclosure

### Technical Problem

Accordingly, the present invention has been made keeping in mind the above problems occurring in the prior art, and an object of the present invention is to provide a clear aligner, a manufacturing method thereof, a traction device for a clear aligner, and an auxiliary tool for a traction device for a clear aligner, wherein at least a pair of buttons are formed on the clear aligner, and the buttons are pulled towards each other by an elastic band so that additional orthodontic force can be provided to the clear aligner.

### Technical Solution

In order to accomplish the above object, in an aspect, the present invention provides a clear aligner comprising a button pulled by an elastic band to provide an additional orthodontic force to the clear aligner, the button being integrally provided on the clear aligner in such a way that a target portion of the clear aligner to be determined to form the button is changed into a ductile phase by applying heat to the target portion and then a pressure is applied to the target portion so that the target portion protrudes from the clear aligner, the button including: a cylindrical body directly protruding from the clear aligner; and a head part provided on an upper end of the cylindrical body, the head part having a larger diameter than a diameter of the cylindrical body.

The button may be formed in such a way that first pliers are heated, the first pliers including a first blade provided with a hollow punch rod, and a second blade provided with a ring into which the hollow punch rod is inserted, the first pliers that have been heated press the target portion and protrude the target portion from the clear aligner so as to form the cylindrical body, second pliers are heated, the second pliers having a double ring structure in which a diameter of an upper ring part is larger than a diameter of a lower ring part, and then the second pliers that have been heated press the cylindrical body so that the head part is formed on the upper end of the cylindrical body, the head part having the larger diameter than the diameter of the cylindrical body.

The button may comprise at least a pair of buttons formed on the clear aligner.

In another aspect, the present invention provides a method for manufacturing a button for a clear aligner so that the button is formed on the clear aligner, the method including: applying heat to a target portion of the clear aligner determined to be a location for forming the button and changing the target portion into a ductile phase; and pressing the target portion of the clear aligner that has been changed into the ductile phase, and protruding the target portion, thus forming the button integrated with the clear aligner.

Furthermore, forming the button may include: applying heat to first pliers, pressing the heated first pliers onto the target portion so that the target portion that has come into contact with the first pliers is changed into a ductile phase by heat transferred from the first pliers, and protruding the target portion that has been changed into the ductile phase, thus forming a cylindrical body protruding from the clear aligner; and pressing an upper end of the cylindrical body using second pliers, thus forming a head part having a larger diameter than a diameter of the cylindrical body.

The first pliers may be configured in such a way that two blades cross each other, a hollow punch rod is provided on an end of a first blade, and a ring is provided on an end of a second blade so that the hollow punch rod is inserted into the ring.

The second pliers may include a first blade and a second blade, each of the first and second blades having a double semicircular shape in which an upper semicircle is larger than a lower semicircle, so that when the first blade and the second blade are brought into contact with each other by applying pressure thereto, double circles are formed.

In a further aspect, the present invention provides a traction device combined with a clear aligner to provide an additional orthodontic force, the traction device including: at least a pair of buttons provided on a dentate area of the clear aligner, the dentate area requiring an orthodontic force; an elastic band pulling the buttons towards each other, thus providing the orthodontic force; and an auxiliary tool comprising a planar body, with a notch formed in an edge of the planar body, the elastic band being inserted into the notch, wherein the auxiliary tool is used to wrap the elastic band around the buttons in such a way that the elastic band is inserted into and hooked to the notch and then the planar body is moved to pull the elastic band.

The buttons may be provided on any one of a clear aligner for an upper jaw and a clear aligner for a lower jaw, or be respectively provided on the clear aligner for the upper jaw and the clear aligner for the lower jaw.

At least one button of the pair of buttons may comprise an independent button that is independently manufactured, the independent button being attached to a tooth of a patient, and a portion of the clear aligner may be perforated, the portion coming into contact with the tooth to which the independent button is attached.

The independent button may include: a fixed part attached to a tooth by an adhesive; a cylindrical body provided on an upper end of the fixed part, the elastic band being wrapped around the cylindrical body; and a head part provided on an upper end of the cylindrical body, the head part having a larger diameter than a diameter of the cylindrical body.

Each of the buttons may include: a cylindrical body protruding from the clear aligner; and a head part provided on an upper end of the cylindrical body, the head part having a larger diameter than a diameter of the cylindrical body so as to prevent the elastic band from being removed from the cylindrical body.

The notch may be configured such that a width of an entrance thereof, through which the elastic band is inserted into the notch, is smaller than a width of the elastic band, whereby the elastic band that has been inserted into the notch is prevented from being removed therefrom.

A bent part may be provided on an end of the planar body, the bent part being hooked to the clear aligner to remove the clear aligner from teeth of a patient.

The button may be formed in such a way that first pliers are heated, the first pliers including a first blade provided with a hollow punch rod, and a second blade provided with a ring into which the hollow punch rod is inserted, the first pliers that have been heated press the target portion and protrude the target portion from the clear aligner so as to form the cylindrical body, second pliers are heated, the second pliers having a double ring structure in which a diameter of an upper ring part is larger than a diameter of a lower ring part, and then the first pliers that have been heated press the cylindrical body so that the head part is formed on the upper end of the cylindrical body, the head part having the larger diameter than the diameter of the cylindrical body.

In yet another aspect, the present invention provides an auxiliary tool for a traction device for a clear aligner, the traction device including at least a pair of buttons provided on a dentate area of the clear aligner, the dentate area requiring an orthodontic force, and an elastic band pulling the buttons towards each other, thus providing the orthodontic force to the clear aligner, the auxiliary tool including a planar body, with a notch formed in an edge of the planar body, the elastic band being inserted into the notch, wherein the auxiliary tool is used to wrap the elastic band around the buttons in such a way that the elastic band is inserted into and hooked to the notch and then the planar body is moved to pull the elastic band.

The notch may be configured such that a width of an entrance thereof, through which the elastic band is inserted into the notch, is smaller than a width of the elastic band, whereby the elastic band that has been inserted into the notch is prevented from being removed therefrom.

The auxiliary tool may further include a bent part provided on an end of the planar body, the bent part being hooked to the clear aligner to remove the clear aligner from teeth of a patient.

### Advantageous Effects

In a clear aligner, a manufacturing method thereof, a traction device for a clear aligner, and an auxiliary tool for a traction device for a clear aligner according to the present invention, buttons that are provided on the clear aligner are pulled toward each other by an elastic band so that additional orthodontic force can be provided. Therefore, the present invention makes it possible to correct the teeth of even a patient whose tooth arrangement is too irregular to be corrected with only the clear aligner.

Furthermore, the orthodontic force of the clear aligner is increased so that an orthodontic period can be reduced.

### Description of Drawings

Fig. 1 is a perspective view illustrating a traction device for a clear aligner according to a preferred embodiment of the present invention;
Fig. 2 is a view showing a traction device that applies traction force to teeth in the vertical direction according to the present invention;
Fig. 3 is a view showing a traction device that applies traction force to teeth in the horizontal direction according to the present invention;
Fig. 4 is a view illustrating an elastic band wrapped around three buttons according to the present invention;
Fig. 5 illustrates independent buttons attached to teeth according to the present invention;
Fig. 6 illustrates pliers used to form a button on a clear aligner according to the present invention, wherein Fig. 6a illustrates first pliers, and Fig. 6b illustrates second pliers;
Fig. 7 is a view illustrating the clear aligner that is perforated at a position corresponding to a tooth to which an independent button has been attached;
Fig. 8 is a perspective view showing an auxiliary tool which enables the easy wrapping of an elastic band around buttons after the clear aligner has been installed on the teeth;
Fig. 9 illustrates a process of wrapping the elastic band around the buttons using the auxiliary tool according to the present invention;
Fig. 10 illustrates a process of wrapping the elastic band around three buttons according to the present invention.

### Best Mode

Hereinafter, an embodiment of the present invention will be explained in detail with reference to the attached drawings.

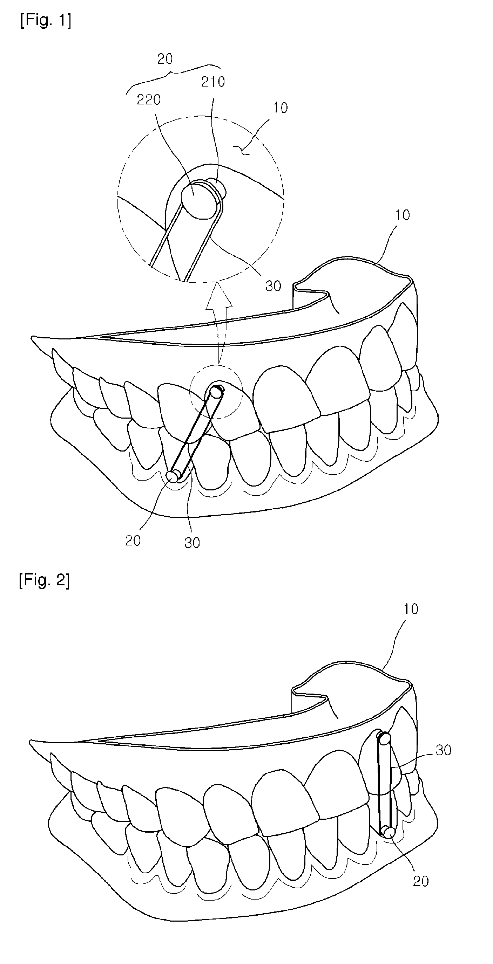

Fig. 1 is a perspective view illustrating a traction device for a clear aligner according to a preferred embodiment of the present invention.

Referring to Fig. 1, the traction device according to the present invention includes a pair of buttons 20 which are provided on a dentate area of the clear aligner 10 that needs orthodontic force, and an elastic band 30 which tracks the buttons towards each other to provide the orthodontic force.

The clear aligner 10 is a device which is used to expand, rotate and return teeth in need of orthodontia depending on current teeth conditions and make finally aligned teeth. The clear aligner 10 is used in such a way that it covers the teeth. In consideration of the maximum displacement (preferably, 1 mm or less) of teeth in need of orthodontia, preferably, several orthodontic steps are required, and clear aligners 10 that correspond to the respective orthodontic steps are used.

The clear aligner 10 is designed and manufactured such that teeth in need of orthodontia can be expanded, rotated and returned. While a patient wears the clear aligner 10 for a predetermined orthodontic period, the teeth are forcibly and finely moved by the shape of the clear aligner 10.

However, as the clear aligner 10 is configured to finely move teeth in need of orthodontia, the orthodontic force is limited. In other words, there is the case where the orthodontia becomes impossible only using the orthodontic force derived from the shape of the clear aligner 10. Given this, the traction device according to the present invention is required.

In more detail, each button 20 is provided on the clear aligner 10 in a protrusion shape. Preferably, at least a pair of buttons 20 are provided to enable the pulling the elastic band so as to provide additional orthodontic force.

The buttons 20 can be disposed on any portions, for example, a dentate area or a gum area of the clear aligner 10. One of the buttons 20 is disposed on a tooth that requires strong orthodontic force or on the gum area around the tooth, and the position of the other button 20 is selected depending on the direction in which the traction force is applied in consideration of conditions of the tooth.

For instance, if vertical traction force is required, as shown in Fig. 2, one button is disposed on the dentate area of a tooth in need of orthodontia, and the other button is disposed on the vertical line extending from the one button. That is, if the teeth of the lower jaw protrude forward and vertical traction is required, a first button is provided on the dentate area of the clear aligner 10 for the lower jaw that is adjacent to the teeth or on the gum area, and a second button is provided on the clear aligner 10 for the upper jaw on the vertical line extending from the first button so as to provide the vertical traction force.

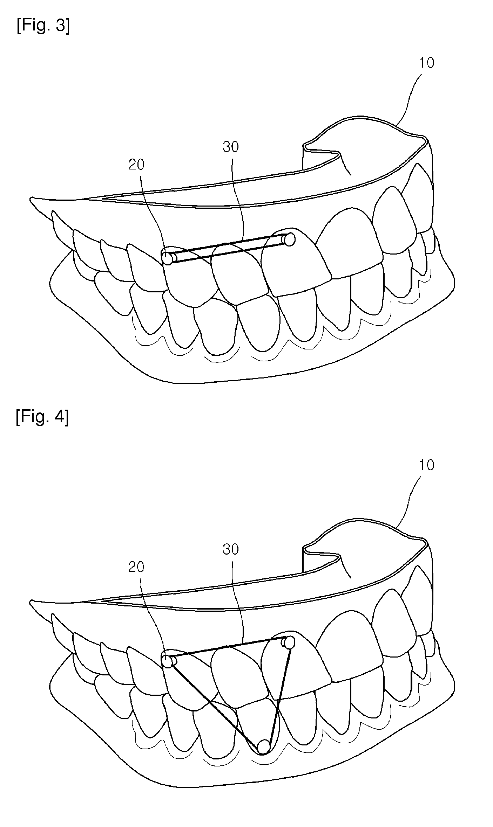

If horizontal traction force is required, as shown in Fig. 3, one button is provided on the dentate area in need of orthodontia, and the other button is provided on the horizontal line extending from the one button.

The buttons 20 may be respectively provided on the clear aligner 10 for the upper jaw and the clear aligner 10 for the lower jaw to provide traction force. Alternatively, both the two buttons may be provided on a single clear aligner 10 to provide traction force.

Furthermore, two buttons 20 are generally provided as a pair. Depending on the direction or magnitude of the orthodontic force, as shown in Fig. 4, three or more buttons may be configured to be pulled by a single elastic band 30.

The buttons may be directly attached to teeth.

In detail, each button may be directly formed on the clear aligner. Alternatively, the button may be independently manufactured and directly attached to a tooth.

In the case where the buttons are provided on the clear aligner, traction force is applied to the clear aligner rather than to the teeth, and the magnitude of traction force applied to the teeth is reduced. However, if the buttons are directly attached to the teeth, the traction force is directly applied to the teeth, so that the magnitude of traction force can be enhanced.

In an embodiment, one of the two buttons is separately manufactured as an independent button 20A which is directly attached to the surface of a tooth in need of orthodontia. The other button is provided on the clear aligner. The two buttons are pulled by the elastic band 30.

Furthermore, both two buttons may be separately manufactured as independent buttons 20A and pulled by the elastic band 30.

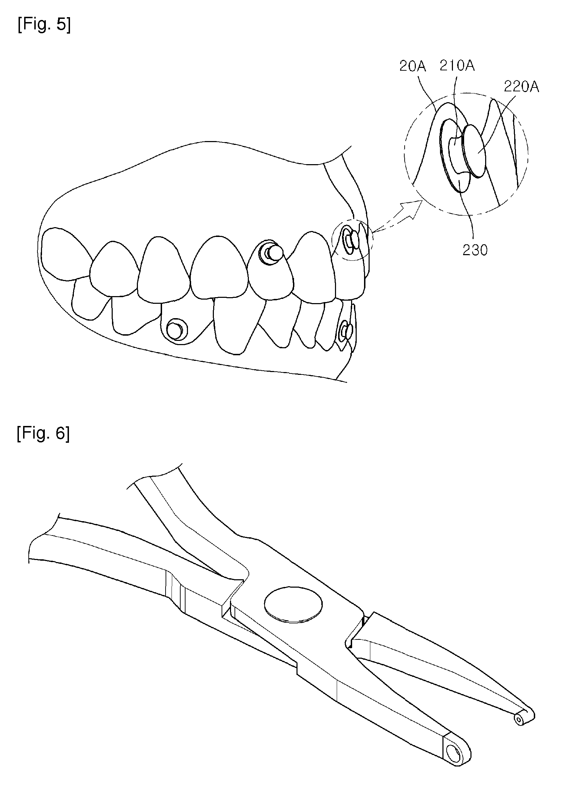

Fig. 5 illustrates independent buttons attached to teeth according to the present invention

As shown in Fig. 5, an independent button is attached by an adhesive to a tooth in need of orthodontia. In this case, because the button is directly attached to the tooth, the adhesive must be made of harmless material. Preferably, an exclusive dental adhesive such as a dentinal adhesive is used.

The independent button is manufactured by injection molding using the same material as that of the clear aligner. The independent button includes a fixed part which is attached to a tooth, a cylindrical body which is provided on the fixed part, and a head part which is provided on the cylindrical body and has a larger diameter than that of the cylindrical body.

If a plurality of teeth needs orthodontic force, a plurality of buttons may be directly attached to the respective teeth.

Furthermore, in the case where the independent button is attached to a tooth, it becomes impossible to wear the general clear aligner. Due to this, a hole is formed in the clear aligner at a position corresponding to the button. The clear aligner is put on the teeth after the button has been attached to the tooth.

The elastic band 30 connects the buttons to each other and functions to provide traction force to the clear aligner 10.

The elastic band 30 is expanded using its elastic force by the distance between the buttons provided on the clear aligner 10. The elastic band 30 is made of elastic material such as rubber so that, when it is wrapped around the buttons, the orthodontic force can be applied to the buttons by the elastic force. Given the fact that the elastic band 30 is installed in the mouth of the patient, it is preferable that the elastic band be made of harmless material.

Hereinafter, a method for manufacturing the traction device for clear aligners according to the present invention will be described.

Because the distance limit in displacement of teeth resulting from the clear aligner 10 is 1 mm or less, clear aligners 10 corresponding to the several orthodontic steps are manufactured. After a wearing period of a first step clear aligner has passed, it is replaced with a second step clear aligner. Such a process is repeated until the final step is completed.

As needed, the clear aligner 10 of each step may be provided with the traction device according to the present invention or without it. That is, whether the traction device is used or not is determined depending on conditions of the teeth of the patient. When, at each step, it is difficult to correct irregular teeth only with the orthodontic force provided by the clear aligner 10 and additional orthodontic force derived from traction force is required, the traction device is used.

First, the clear aligners 10 for the upper and lower jaws are manufactured. A position at which the button 20 is disposed is determined in each clear aligner. Thereafter, the button 20 is provided at the determined position.

The clear aligner 10 is made of Tupan which is a plastic-based environment-friendly transparent material. Tupan is material which is easily deformed by heat. Therefore, the button can be integrally provided with the clear aligner when the clear aligner is formed using heat.

However, if heat is directly applied to the clear aligner 10, it may be undesirably deformed. Given this, a method of indirectly applying heat to the clear aligner is used. In detail, after heat is applied to first pliers which are provided to form a protrusion, pressure is applied, using the first pliers that are heated, to a portion of the clear aligner 10 at which the button 20 is formed. Then, the portion of the clear aligner that comes into contact with the first pliers is ductilely deformed by heat transferred from the first pliers. Thereby, the cylindrical body protrudes from the clear aligner 10.

As shown in Fig. 6, the first pliers are configured in such a way that two blades cross each other in the same manner as that of typical pliers. A hollow punch rod is provided on an end of a first blade of the first pliers, and a ring into which the punch rod is inserted is provided on an end of a second blade thereof.

After the first pliers are heated by a heating means such as a gas torch, the first pliers are aligned with the portion of the clear aligner in which the button 20 is formed, and then the first pliers are pressed. Then, a portion of the clear aligner 10 is pushed into the hollow punch rod of the first blade, whereby the cylindrical body is formed.

As such, after the cylindrical body has been formed, second pliers are used to form the head part, having a larger diameter than that of the cylindrical body, on an upper end of the cylindrical body.

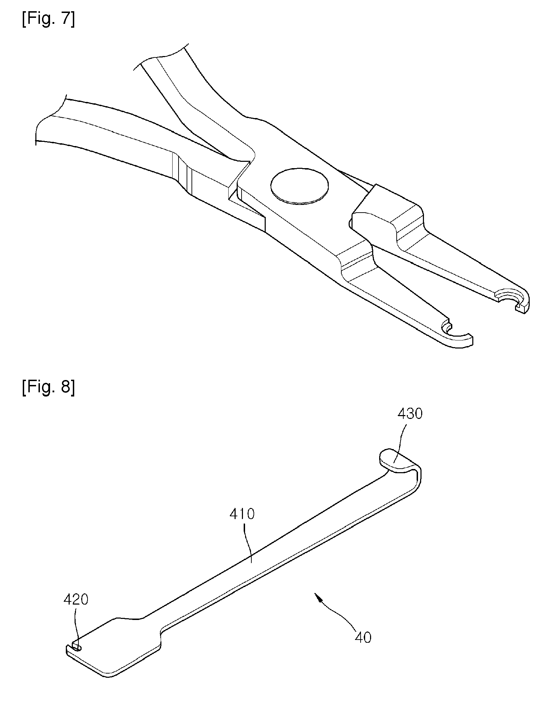

In more detail, as shown in Fig. 7, each of first and second blades of the second pliers has a semicircular shape, particularly, a double semicircular shape in which an upper semicircle is larger than a lower semicircle. When the first blade and the second blade are brought into contact with each other by applying pressure thereto, double circles are formed.

After the second pliers are heated, the cylindrical body that has been formed by the first pliers is pressed by the second pliers. Then, the head part 220 that has a comparatively large diameter is formed on the upper end of the cylindrical body 210.

The head part 220 functions to prevent the elastic band that has been provided over the button 20 and wrapped around the cylindrical body from being undesirably removed therefrom.

Meanwhile, in the case of the independent button 20A which is directly attached to the surface of a tooth, the button 20A is manufactured by injection molding. Here, the button 20A includes a fixed part 230A which is attached to a tooth by an adhesive, a cylindrical body 210A which is provided on the fixed part and around which the elastic band 30 is wrapped, and a head part 220A which is provided on the cylindrical body and has a larger diameter than that of the cylindrical body.

After adhesive is applied to a rear surface of the button 20A that has been manufactured by the above-mentioned method, it is attached to the surface of a tooth in need of orthodontia.

Meanwhile, after the clear aligner has been manufactured, as shown in Fig. 8, a portion of the dentate area of the clear aligner at which the button 20A is disposed is perforated. The patient wears the clear aligner in such a way that the button 20A protrudes through the perforated portion.

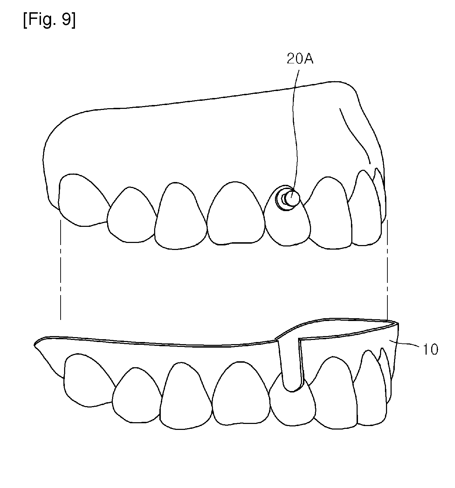

Fig. 9 is a perspective view showing an auxiliary tool which enables to easily wrap the elastic band around the buttons 20 after the clear aligner has been installed on the teeth

Referring to Fig. 9, the auxiliary tool 40 includes a planar body 410, a notch 420 which is formed an edge of the body 410, and a bent part 430 which is provided on an end of the body 410.

The notch 420 is used to hook the elastic band. The body 410 functions as a handle to control the elastic band that is hooked to the notch 420. The bent part 430 functions as a hook which is used to easily remove the clear aligner 10 that has been mounted to the teeth therefrom.

A process of wrapping the elastic band 30 around the buttons 20 using the auxiliary tool 40 will be described. In detail, an embodiment in which the elastic band 30 is wrapped around the three buttons will be explained.

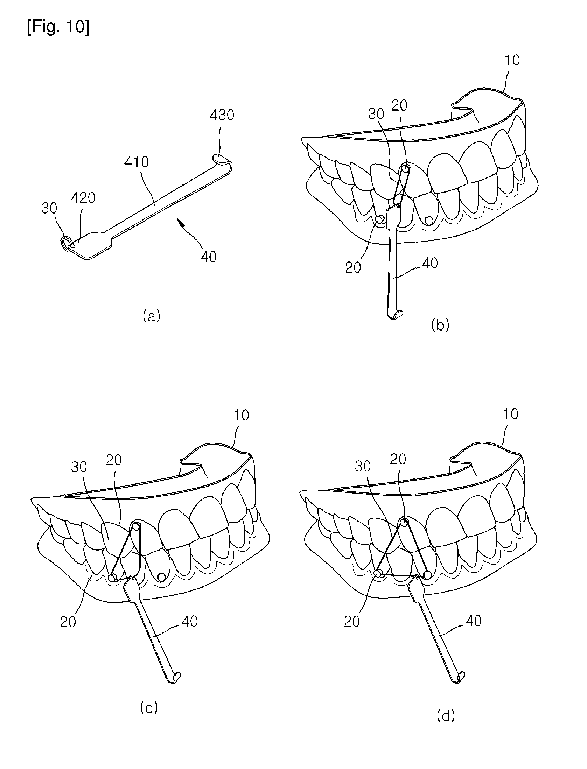

As shown in Fig. 10a, the elastic band is inserted into the notch 420 of the auxiliary tool 40 and hooked thereto.

Preferably, the notch 420 is configured such that the width of an entrance thereof, through which the elastic band is inserted into the notch 420, is smaller than that of the elastic band, and the width of an inner portion of the notch is larger than that of the elastic band. Therefore, after the elastic band is inserted into the notch 420, it is not easily removed therefrom.

Thereafter, as shown in Fig. 10b, using the body 410 of the auxiliary tool, a user hangs the elastic band on a first button of the three buttons. Because the body 410 of the auxiliary tool has a planar shape, the user grasps the body 410 and is able to easily hang the elastic band on the first button.

After the elastic band 30 is hung on the first button, as shown in Fig. 10c, the body 410 of the auxiliary tool is pulled towards a second button, and the elastic band is hung on the second button.

After the elastic band is hung on the second button, as shown in Fig. 10d, the body 410 of the auxiliary tool is pulled towards a third button, and the elastic band is hung on the third button such that the elastic band is wrapped around the first, second and third buttons.

As can be easily understood from Figs. 10a through 10d, if the auxiliary tool is used, the elastic band can be easily wrapped around the buttons 20 provided on the clear aligners 10 that have been mounted to the teeth.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A clear aligner comprising a button pulled by an elastic band to provide an additional orthodontic force to the clear aligner,
the button being integrally provided on the clear aligner in such a way that a target portion of the clear aligner to be determined to form the button is changed into a ductile phase by applying heat to the target portion and then a pressure is applied to the target portion so that the target portion protrudes from the clear aligner, the button comprising:
a cylindrical body directly protruding from the clear aligner; and
a head part provided on an upper end of the cylindrical body, the head part having a larger diameter than a diameter of the cylindrical body.

2. The clear aligner of claim 1, wherein the button is formed in such a way that first pliers are heated, the first pliers comprising a first blade provided with a hollow punch rod, and a second blade provided with a ring into which the hollow punch rod is inserted, the first pliers that have been heated press the target portion and protrude the target portion from the clear aligner so as to form the cylindrical body, second pliers are heated, the second pliers having a double ring structure in which a diameter of an upper ring part is larger than a diameter of a lower ring part, and then the second pliers that have been heated press the cylindrical body so that the head part is formed on the upper end of the cylindrical body, the head part having the larger diameter than the diameter of the cylindrical body.

3. The clear aligner of claim 1, wherein the button comprises at least a pair of buttons formed on the clear aligner.

4. A method for manufacturing a button for a clear aligner so that the button is formed on the clear aligner, the method comprising:
applying heat to a target portion of the clear aligner determined to be a location for forming the button and changing the target portion into a ductile phase; and
pressing the target portion of the clear aligner that has been changed into the ductile phase, and protruding the target portion, thus forming the button integrated with the clear aligner.

5. The method of claim 4, wherein forming the button comprises
applying heat to first pliers, pressing the heated first pliers onto the target portion so that the target portion that has come into contact with the first pliers is changed into a ductile phase by heat transferred from the first pliers, and protruding the target portion that has been changed into the ductile phase, thus forming a cylindrical body protruding from the clear aligner; and
pressing an upper end of the cylindrical body using second pliers, thus forming a head part having a larger diameter than a diameter of the cylindrical body.

6. The method of claim 5, wherein the first pliers are configured in such a way that two blades cross each other, a hollow punch rod is provided on an end of a first blade, and a ring is provided on an end of a second blade so that the hollow punch rod is inserted into the ring.

7. The method of claim 5, wherein the second pliers comprises a first blade and a second blade, each of the first and second blades having a double semicircular shape in which an upper semicircle is larger than a lower semicircle, so that when the first blade and the second blade are brought into contact with each other by applying pressure thereto, double circles are formed.

8. A traction device combined with a clear aligner to provide an additional orthodontic force, the traction device comprising:
at least a pair of buttons provided on a dentate area of the clear aligner, the dentate area requiring an orthodontic force;
an elastic band pulling the buttons towards each other, thus providing the orthodontic force; and
an auxiliary tool comprising a planar body, with a notch formed in an edge of the planar body, the elastic band being inserted into the notch, wherein the auxiliary tool is used to wrap the elastic band around the buttons in such a way that the elastic band is inserted into and hooked to the notch and then the planar body is moved to pull the elastic band.

9. The traction device of claim 8, wherein the buttons are provided on any one of a clear aligner for an upper jaw and a clear aligner for a lower jaw, or are respectively provided on the clear aligner for the upper jaw and the clear aligner for the lower jaw.

10. The traction device of claim 8, wherein at least one button of the pair of buttons comprises an independent button that is independently manufactured, the independent button being attached to a tooth of a patient, and
a portion of the clear aligner is perforated, the portion coming into contact with the tooth to which the independent button is attached.

11. The traction device of claim 10, wherein the independent button comprises:
a fixed part attached to a tooth by an adhesive;
a cylindrical body provided on an upper end of the fixed part, the elastic band being wrapped around the cylindrical body; and
a head part provided on an upper end of the cylindrical body, the head part having a larger diameter than a diameter of the cylindrical body.

12. The traction device of claim 8, wherein each of the buttons comprises:
a cylindrical body protruding from the clear aligner; and
a head part provided on an upper end of the cylindrical body, the head part having a larger diameter than a diameter of the cylindrical body so as to prevent the elastic band from being removed from the cylindrical body.

13. The traction device of claim 8, wherein the notch is configured such that a width of an entrance thereof, through which the elastic band is inserted into the notch, is smaller than a width of the elastic band, whereby the elastic band that has been inserted into the notch is prevented from being removed therefrom.

14. The traction device of claim 8, wherein a bent part is provided on an end of the planar body, the bent part being hooked to the clear aligner to remove the clear aligner from teeth of a patient.

15. The traction device of claim 14, wherein the button is formed in such a way that first pliers are heated, the first pliers comprising a first blade provided with a hollow punch rod, and a second blade provided with a ring into which the hollow punch rod is inserted, the first pliers that have been heated press the target portion and protrude the target portion from the clear aligner so as to form the cylindrical body, second pliers are heated, the second pliers having a double ring structure in which a diameter of an upper ring part is larger than a diameter of a lower ring part, and then the first pliers that have been heated press the cylindrical body so that the head part is formed on the upper end of the cylindrical body, the head part having the larger diameter than the diameter of the cylindrical body.

16. An auxiliary tool for a traction device for a clear aligner, the traction device comprising at least a pair of buttons provided on a dentate area of the clear aligner, the dentate area requiring an orthodontic force, and an elastic band pulling the buttons towards each other, thus providing the orthodontic force to the clear aligner,
the auxiliary tool comprising
a planar body, with a notch formed in an edge of the planar body, the elastic band being inserted into the notch, wherein the auxiliary tool is used to wrap the elastic band around the buttons in such a way that the elastic band is inserted into and hooked to the notch and then the planar body is moved to pull the elastic band.

17. The auxiliary tool of claim 16, wherein the notch is configured such that a width of an entrance thereof, through which the elastic band is inserted into the notch, is smaller than a width of the elastic band, whereby the elastic band that has been inserted into the notch is prevented from being removed therefrom.

18. The auxiliary tool of claim 16, further comprising
a bent part provided on an end of the planar body, the bent part being hooked to the clear aligner to remove the clear aligner from teeth of a patient.
